# NEUE EUROPÄISCHE PATENTSCHRIFT

(11) **EP 0 968 862 B2**
(45) Veröffentlichungstag und Bekanntmachung des Hinweises auf die Entscheidung über den Einspruch: **22.06.2011**
(45) Hinweis auf die Patenterteilung: 21.07.2004
(21) Anmeldenummer: 99108351.0
(22) Anmeldetag: 28.04.1999
(51) Int. Cl.: B60J 1/16

(54) **Schiebefenster für eine Kraftfahrzeugtür**
Sliding window for a motor vehicle door
Fenêtre coulissante pour véhicule automobile

(30) Priorität: 03.07.1998 DE 19829816; 09.09.1998 DE 19841222
(43) Veröffentlichungstag der Anmeldung: 05.01.2000
(73) Patentinhaber: DURA Automotive Body & Glass Systems GmbH, 58840 Plettenberg (DE)
(72) Erfinder: Gucinski, Uwe, 58840 Plettenberg (DE); Kraus, Jürgen, 58802 Balve (DE); Schneider, Frank, 58762 Altena (DE); Schulte, Martin, 58802 Balve (DE); Vornbäumen, Jens, 58762 Altena (DE); Winkhaus, Kai, 58762 Altena (DE)
(74) Vertreter: Laufhütte, Dieter

(56) Entgegenhaltungen:
- EP-A- 0 673 820
- EP-A- 0 778 168
- EP-A1- 0 445 685
- EP-A1- 0 956 987
- DE-C- 4 038 900
- DE-U- 8 814 603
- FR-A1- 2 552 483
- US-A- 4 561 224
- US-A- 4 850 139
- US-A- 5 522 191
- US-A- 5 613 323

## Beschreibung

Die vorliegende Erfindung betrifft ein Schiebefenster zum Einbau in Türen oder Seitenwände von Fahrzeugen mit wenigstens einem feststehenden Fenster und wenigstens einem bewegbaren Fenster sowie mit Führungsschienen, in denen das bewegbare Fenster verschiebbar aufgenommen ist.

Derartige Schiebefenster sind in zahlreichen Ausführungsformen mit verschiebbaren und/oder verschwenkbaren Fenstern bekannt. Sie werden bei den unterschiedlichsten Fahrzeugtypen, wie z.B. bei Omnibussen und bei Großraumlimousinen eingesetzt, bei denen auch die Belüftung der hinteren Sitzreihen gewährleistet sein sollte und entsprechend die Öffnungsmöglichkeit der Seitenfenster gegeben sein muß. Aus der U.S. 5,542,214 ist ein Fahrzeugschiebefenster bekannt, bei dem ein oder mehrere feststehende und wenigstens ein bewegbares Fenster vorgesehen sind. Die feststehenden Fenster sind in einem umlaufenden Rahmen aufgenommen, der bei der Montage in eine entsprechende Karosserieöffnung eingesetzt wird und der Führungsschienen zur Aufnahme des bewegbaren Fensters aufweist. Ein Nachteil einer derartigen Konstruktion besteht darin, daß in dem Rahmen eine Ausnehmung zur Aufnahme der feststehenden Scheibe sowie parallel dazu die Führungsschiene angeordnet ist, wodurch der Rahmen eine verhältnismäßig große Einbautiefe aufweist.

In der gattungsgemäßen US 5,612,323 A umfasst das dort beschriebene bewegbare Fenster eine Glasscheibe und einen diese einfassenden Rahmen.

Es ist die Aufgabe der vorliegenden Erfindung, ein gattungsgemäßes Schiebefenster dahingehend weiterzubilden, daß dieses eine geringe Einbautiefe aufweist.

Diese Aufgabe wird ausgehend von einem gattungsgemäßen Schiebefenster dadurch gelöst, daß ein neben dem feststehenden Fenster angeordneter und mit diesem verbundener feststehender Blendrahmen vorgesehen ist, in dem das bewegbare Fenster im geschlossenen Zustand aufgenommen ist, und daß die Führungsschienen auf der zum Fahrzeuginnenraum gerichteten Seite mit dem feststehenden Fenster und/oder mit dem Blendrahmen verbunden sind und derart angeordnet sind, dass das bewegbare Fenster beim Öffnen innen am feststehenden Fenster vorbeigeführt wird. Während bei vorbekannten Lösungen das feststehende Fenster in einen Rahmen eingefügt bzw. eingeklebt wird, in dem parallel zu der feststehenden Scheibe auch die Führungsschienen für das bewegbare Fenster angeordnet sind, wird das erfindungsgemäße feststehende Fenster ohne einen derartigen umlaufenden Rahmen unmittelbar bzw. mittels einer Dichtung in die Karosserieöffnung eingesetzt werden, wodurch sich der Vorteil ergibt, dass eine verhältnismäßig geringe Einbautiefe erreicht wird. Hinzu kommt, daß die Führungsschienen eine geringe Bauhöhe beanspruchen, so daß von der Karosserieöffnung eine größtmögliche Lichtfläche verbleibt.

Im Bereich neben dem feststehenden Fenster ist ein Blendrahmen vorgesehen, der das feststehende Fenster nicht umgibt, sondern stirnseitig neben dem feststehenden Fenster angeordnet ist. Wird der Blendrahmen entsprechend flach gehalten, ergibt sich insgesamt ein Schiebefenstermodul mit geringer Einbautiefe, wodurch sich auch nur eine entsprechend geringe Flanschtiefe bezogen auf die Karosserieaußenhaut ergibt.

Aus der Tatsache, daß das bewegbare Fenster innen an dem feststehenden Fenster vorbeigeführt wird, ergibt sich der Vorteil, daß eine Geräuschentwicklung und hohe mechanische Beanspruchung, wie sie bei außen liegenden bewegbaren Fenstern auftreten, nicht vorliegen. Außerdem wird erreicht, daß sich das bewegbare Fenster im Gegensatz zu außen geführten Fenstern vollständig öffnen läßt, so daß eine optimale Öffnungsfläche erreicht wird.

In weiterer Ausgestaltung der vorliegenden Erfindung ist vorgesehen, daß das bewegbare Fenster im geschlossenen Zustand bündig mit dem Blendrahmen abschließt und daß die Außenseite des Blendrahmens mit der Außenseite des feststehenden Fensters fluchtet. Dadurch ergibt sich insgesamt eine bündig abschließende Konstruktion, wobei sowohl die Außenseite des Blendrahmens mit der Außenseite des feststehenden Fensters als auch das bewegbare Fenster mit dem Blendrahmen fluchtet.

Besonders vorteilhaft ist es, wenn die Führungsschienen mit dem Blendrahmen sowie mit dem feststehenden Fenster verbunden sind. Dadurch ergibt sich eine Stützwirkung des erfindungsgemäßen Schiebefensters, die zur einer Versteifung des Blendrahmens führt.

In weiterer Ausgestaltung der vorliegenden Erfindung ist vorgesehen, daß die Führungsschienen mit dem Blendrahmen verklebt oder durch ein werkstoffabhängiges Kunststoff-Schweißverfahren verbunden sind und mit dem feststehenden Fenster verklebt sind. Liegen sowohl die Führungsschienen als auch der Blendrahmen in einer Kunststoffausführung vor, kann als Kunststoff-Schweißverfahren die Methode des Vibrationsschweißens angewandt werden.

Die Führungsschienen können gänzlich aus Metall oder Kunststoff hergestellt sein oder eine Kunststoffassung aufweisen, in die ein gebogenes Walzprofil aus Stahl oder ein Preßprofil aus Aluminium eingelegt ist.

Gemäß der vorliegenden Erfindung ist vorgesehen, daß das bewegbare Fenster einen Rahmen aufweist, an dessen Ober- und Unterseite Führungsbolzen vorgesehen sind. Die Führungsbolzen sind in den Führungsschienen aufgenommen. Der Rahmen kann als umlaufend angespritzter Kunststoffrahmen ausgeführt sein. Der Kunststoffrahmen kann eine Metalleinlage aufweisen.

Besonders vorteilhaft ist es, wenn auf der Ober- und/oder Unterseite des Rahmens Führungshebel angeordnet sind, die mit dem Rahmen schwenkbar verbunden sind und die derart in der Führungsschiene aufgenommen sind, daß eine Schiebebewegung des bewegbaren Fensters zu dessen Ausstellbewegung führt.

Die Führungsschiene kann zwei unterschiedlich tief ausgeführte Nuten aufweisen, wobei die Führungsbolzen in einer Nut und die Führungshebel in der anderen Nut bewegbar aufgenommen sind.

Besonders vorteilhaft ist es, wenn die die Führungshebel aufnehmende Nut in ihrem Endbereich gekrümmt ausgeführt ist. Hierdurch wird erreicht, daß eine laterale Bewegung des bewegbaren Fensters beim Öffnen auch zu einer zum Fahrzeuginnenraum gerichteten Bewegung führt, wodurch das bewegbare Fenster an dem feststehenden Fenster vorbeigeschoben werden kann. Vorteilhaft werden die Führungshebel in einer in ihrem Endbereich gekrümmt ausgeführten tieferen Nut und die Führungsbolzen in einer gradlinig verlaufenden weniger tief ausgeführten Nut gehalten.

Besonders vorteilhaft ist es, wenn das bewegbare Fenster eine umlaufende und außen liegende Dichtung aufweist. Die Dichtung kann als Schlauchdichtung ausgeführt sein. Die umlaufende und nach außen gerichtete bzw. außen liegende Dichtung weist den Vorteil auf, daß keine Relativbewegung zwischen Glas und Dichtungsmaterial erfolgt, wodurch eine hemmende Reibung beim Öffnen und Schließen des bewegbaren Fensters vermieden wird. Im Schließzustand des bewegbaren Fensters ergibt sich eine hohe Dichtheit des erfindungsgemäßen Schiebefensters, da die umlaufende und nach außen gerichtete Schlauchdichtung fest auf einer angrenzenden Fläche des Blendrahmens bzw. des feststehenden Fensters aufliegt.

In weiterer Ausgestaltung der vorliegenden Erfindung ist vorgesehen, daß umlaufend um das feststehende Fenster und den Blendrahmen eine Dichtung angeordnet ist. Diese Dichtung dient dazu, das gesamte fertig montierte erfindungsgemäße Schiebefenster abdichtend in eine entsprechende Aussparung einer Karosserie einzufügen.

Weitere Vorteile und Einzelheiten der vorliegenden Erfindung werden anhand eines in der Zeichnung dargestellten Ausführungsbeispiels näher erläutert. Es zeigen:
- Fig. 1:: eine perspektivische Ansicht des neben dem feststehenden Fenster angeordneten und mit diesem verbundenen Blendrahmens,
- Fig. 2:: eine perspektivische Ansicht des feststehenden Fensters mit umlaufend zur Karosserieöffnung angespritzter Dichtung,
- Fig. 3:: eine perspektivische Ansicht des Blendrahmens mit Führungsschienen,
- Fig. 4:: eine perspektivische Ansicht des bewegbaren Fensters mit Kunststoffrahmen, angefügten Führungsbolzen und -hebeln und Dichtung,
- Fig. 5:: eine auseinandergezogene Darstellung des bewegbaren Fensters gemäß Fig. 4,
- Fig. 6:: eine perspektivische Ansicht des erfindungsgemäßen Schiebefensters mit feststehendem Fenster und eingesetztem Schiebefenster,
- Fig. 7:: eine auseinandergezogene Darstellung des erfindungsgemäßen Schiebefensters gemäß Fig. 6,
- Fig. 8:: Schnittansichten von Vertikalschnitten durch den Blendrahmen und das bewegbare Fenster,
- Fig. 9:: Schnittansichten von Vertikalschnitten durch das feststehende und das bewegbare Fenster,
- Fig. 10:: Schnittansichten von Horizontalschnitten durch den Blendrahmen, das bewegbare Fenster und das feststehende Fenster,
- Fig. 11:: eine schematische Darstellung der Kinematik der Führungshebel und der entsprechenden Fensterbewegung,
- Fig. 12:: perspektivische Ansichten eines Griffelementes und des Führungshebels und
- Fig. 13:: eine Vorderansicht und eine seitliche Schnittansicht des Griffelementes.

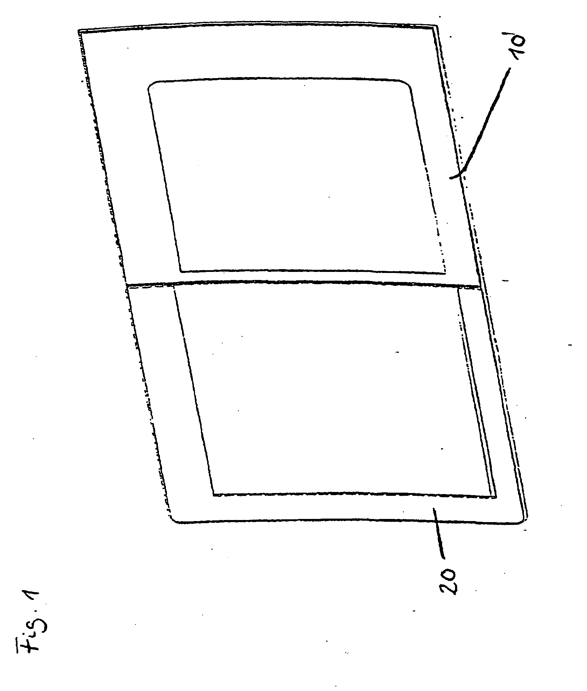

Fig. 1 zeigt in perspektivischer Darstellung in der rechten Hälfte das feststehende Fenster 10 das stimseitig mit dem neben diesem angeordneten Blendrahmen 20 verbunden ist. Das feststehende Fenster 10 sowie der Blendrahmen 20 weisen bündige Außenflächen auf und legen die äußeren Abmessungen des erfindungsgemäßen Schiebefensters fest, das in eine entsprechend ausgeführte Karosserieöffnung eingesetzt wird.

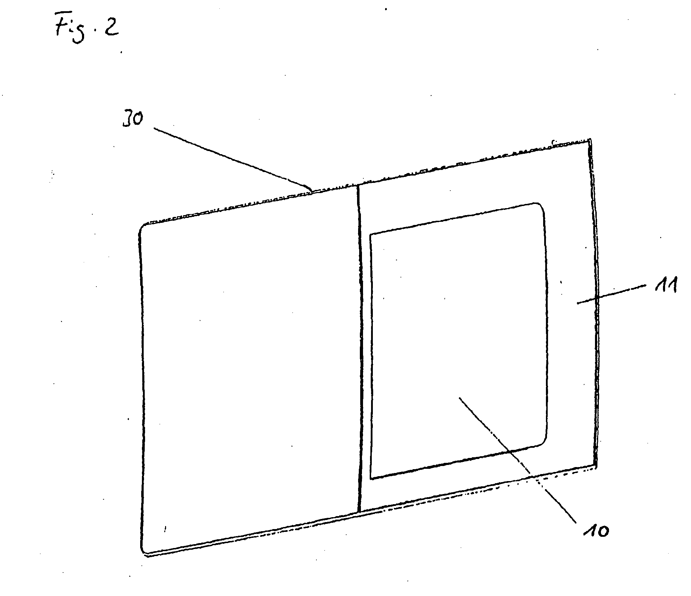

In Fig. 2 ist eine perspektivische Darstellung des feststehenden Fensters 10 gezeigt, das mit einem Keramikrand 11 versehen ist. Die feststehende Scheibe 10 weist vorzugsweise eine Dicke von 3,2 mm auf. Um die feststehende Scheibe 10 und den daneben angeordneten Bereich zur Anordnung des Blendrahmens ist eine Dichtung 30 angespritzt, die in ihrer Größe den Abmessungen der das Schiebefenster aufnehmenden Karosserieöffnung entspricht. Die Dichtung 30 ist vorteilhaft als TPE-Dichtung ausgeführt. Die Dichtung 30 haftet an der feststehenden Scheibe 10 und ist in dem links davon dargestellten Bereich bis zum Einsetzen des Blendrahmens freiliegend.

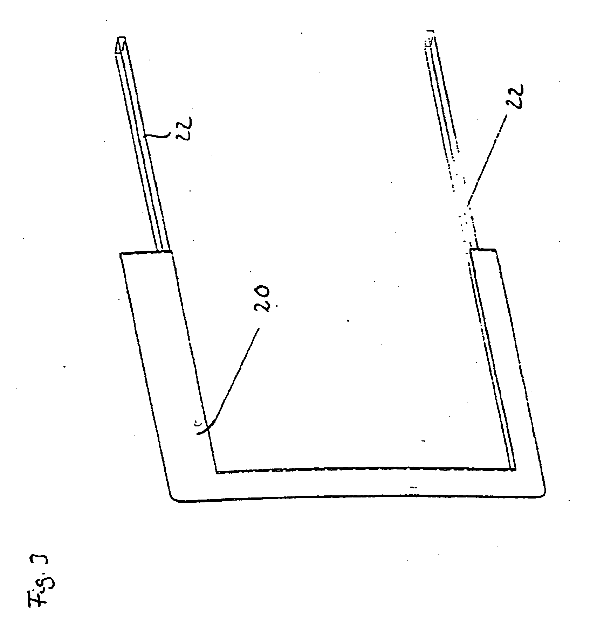

Fig. 3 zeigt den Blendrahmen 20, der vorteilhaft als matt-lackierter Kunststoffrahmen ausgeführt ist. Auf der zum Fahrzeuginnenraum gerichteten und gemäß Fig. 3 hinten liegenden Seite des Blendrahmens 20 sind die Führungsschienen 22 angeordnet, die durch Vibrationsschweißen mit dem Blendrahmen 20 zusammengefügt werden. Alternativ dazu ist denkbar, daß der Blendrahmen 20 als Blechteil ausgeführt ist und die Führungsschienen 22 mit diesem verklebt werden.

Die Führungsschienen 22 sind vorteilhaft als Kunststoffschienen ausgelegt und weisen als Einlegeteil ein Walzprofil aus Stahl oder ein Aluminium-Preßprofil auf.

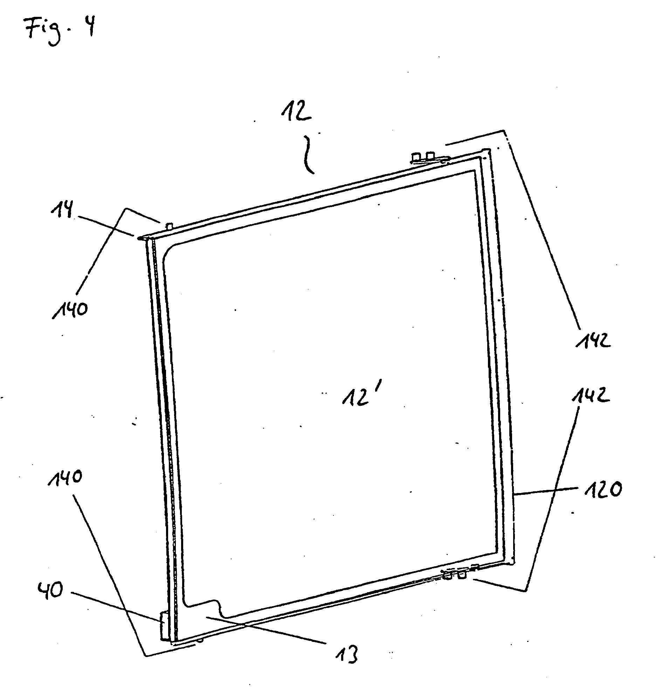

Fig. 4 zeigt in einer perspektivischen Darstellung das bewegbare Fenster 12, das einen Rahmen 14 aufweist. Der Rahmen 14 ist gemäß dem vorliegenden Ausführungsbeispiel als umlaufend angespritzter Kunststoffrahmen ausgeführt, der eine Metalleinlage aufweisen kann. Im links dargestellten Bereich des Rahmens 14 sind auf der Ober- und Unterseite Führungsbolzen 140 angeordnet, die im montierten Zustand in der Führungsschiene aufgenommen sind. Im rechten Bereich des Rahmens 14 sind ebenfalls auf der Ober- und Unterseite mit dem Rahmen 14 verschraubte Führungshebel 142 angeordnet, die bei lateraler Bewegung des Fensters 12 dessen zum Fahrzeuginnenraum gerichtete Bewegung bewirken. Die Führungshebel 142 weisen POM-Gleitbuchsen auf, die in der Führungsschiene aufgenommen werden. Die Scheibe 12' des feststehenden Fensters 12 weist einen umlaufenden Keramikrand 13 auf.

Der Rahmen 14 ist umlaufend mit der Dichtung 120 versehen, die gemäß dem vorliegenden Ausführungsform als Schlauchdichtung ausgeführt ist. Die Schlauchdichtung ist in den Rahmen 14 eingezogen. Auf der Innenseite des Rahmens 14 befindet sich das Griffelement 40, das mit diesem verschraubt ist.

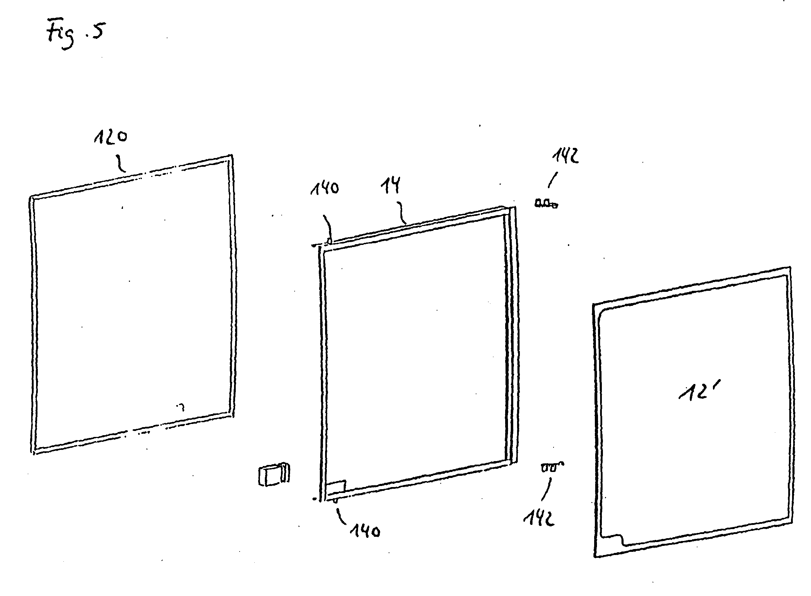

Fig. 5 zeigt eine auseinandergezogene Darstellung der Anordnung gemäß Fig. 4 mit der Scheibe 12', dem Rahmen 14, sowie der umlaufenden Schlauchdichtung 120. Ferner sind in Fig. 5 die Führungshebel 142 dargestellt, die mit dem Rahmen verschraubt werden. Die Führungsbolzen 140 sind vorteilhaft an dem Rahmen angespritzt. Die Schlauchdichtung 120 weist EPDM oder Moosgummi auf.

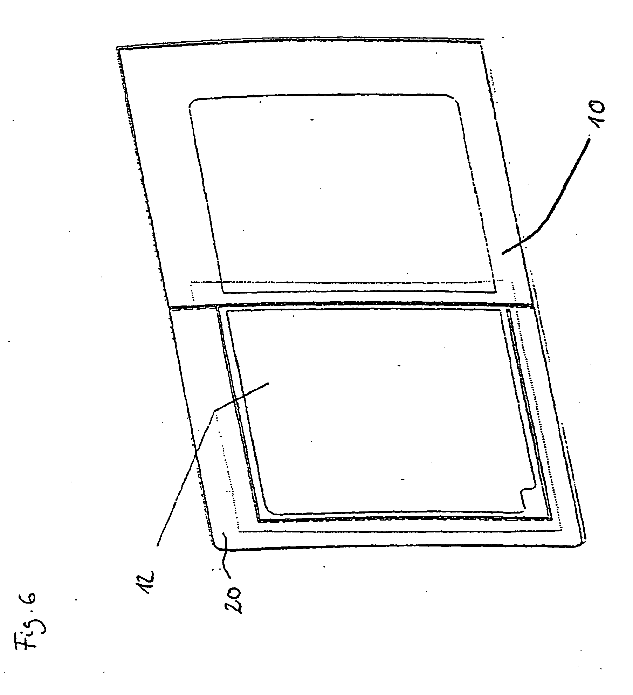

Fig. 6 zeigt eine perspektivische Darstellung des montagefertigen erfindungsgemäßen Schiebefensters mit dem rechts angeordneten feststehenden Fenster 10 und dem links in den Blendrahmen 20 aufgenommenen bewegbaren Fenster 12. Dieses fluchtet im geschlossenen Zustand mit der Außenseite des Blendrahmens 20, so daß sich insgesamt eine bündige und glatte Anordnung des erfindungsgemäßen Schiebefensters ergibt.

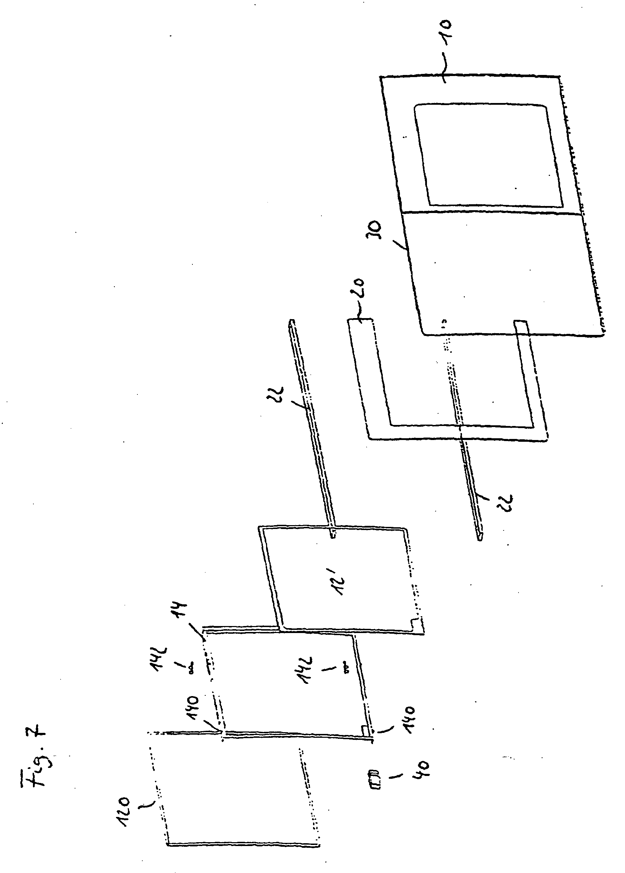

Fig. 7 zeigt eine auseinandergezogene Darstellung des erfindungsgemäßen Schiebefensters gemäß Fig. 6.

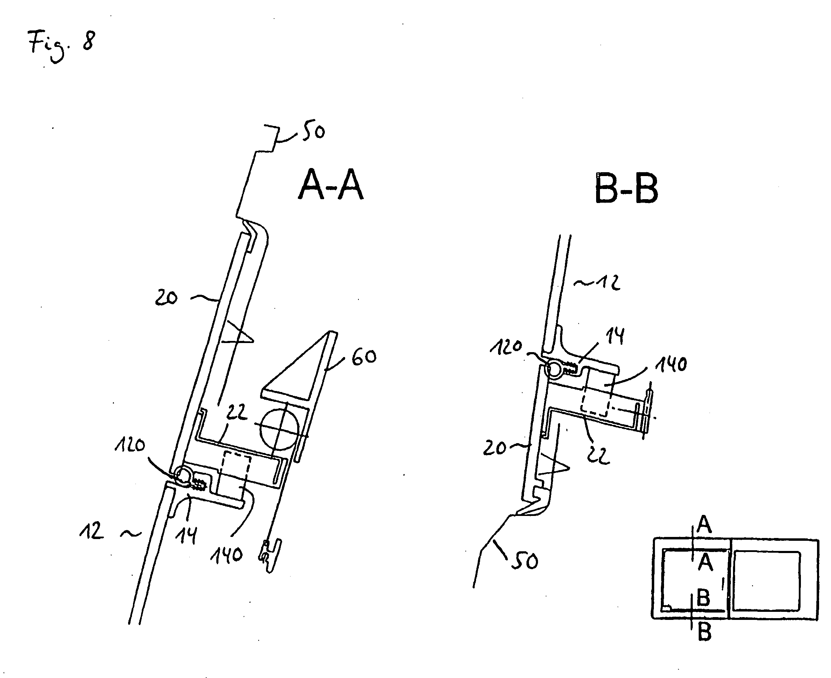

In Fig. 8 sind zwei Schnittdarstellungen eines Vertikalschnittes durch den Blendrahmen 20 und das darin aufgenommene bewegbare Fenster 12 dargestellt.

In der Schnittdarstellung A-A ist die Karosserieaußenhaut 50 dargestellt, in die der Blendrahmen 20 eingeklebt ist. Dieser besteht entweder aus Kunststoff oder alternativ aus Blech. Der Blendrahmen 20 weist die Führungsschiene 22 auf, in der der Führungsbolzen 140 des bewegbaren Fensters 12 aufgenommen ist. Das bewegbare Fenster 12 umfaßt den Rahmen 14, in dem die Schlauchdichtung 120 eingezogen ist. Diese liegt im geschlossenen Zustand dichtend an dem Blendrahmen 20 an. Ferner kann eine Blende 60 vorgesehen sein, die vorteilhaft beispielsweise ein Rollo zum Fliegenschutz oder Sichtschutz fixiert bzw. abdeckt.

Die Schnittdarstellung gemäß Linie B-B zeigt den unteren Abschnitt des Blendrahmens 20, der auch hier mit der Karosserieaußenhaut 50 verklebt ist. Auch im unteren Bereich des Blendrahmens 20 befindet sich die Führungsschiene 22, in der entsprechend der untere Führungsbolzen 140 aufgenommen ist, der an dem Rahmen 14 des bewegbaren Fensters 12 angespritzt ist. Die umlaufende Dichtung 120 des Rahmens 14 dichtet gegen den Blendrahmen 20 ab.

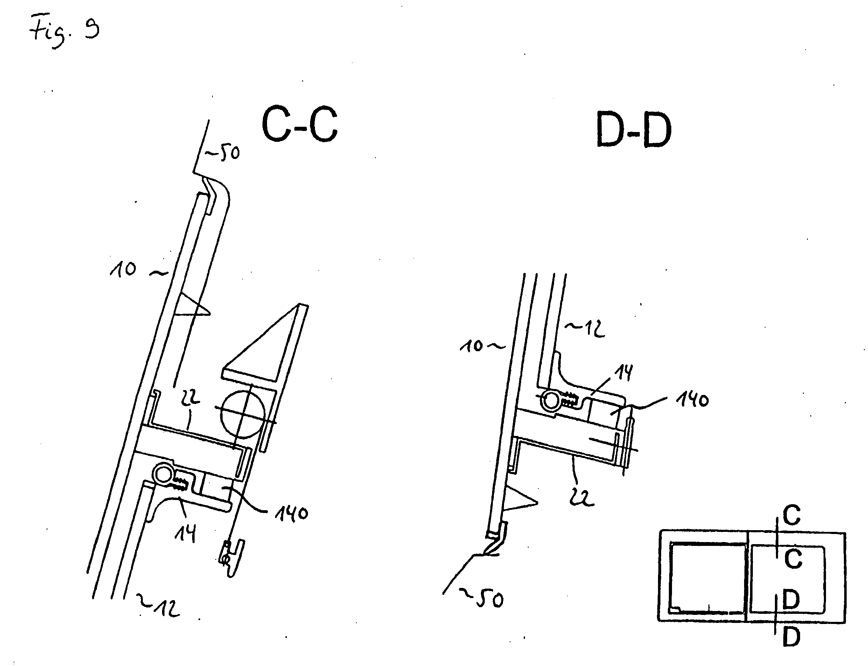

Fig. 9 zeigt die vertikalen Schnitte C-C und D-D durch das feststehende Fenster 10 und das geöffnete bewegbare Fenster 12.

Erfindungsgemäß ist das feststehende Fenster 10 mit der Karosserieaußenhaut 50 sowie mit der Führungsschiene 22 verklebt. Die Führungsschiene 22 nimmt den Führungsbolzen 140 des geöffneten bewegbaren Fensters 12 auf. Dieser ist an den Kunststoffrahmen 14 angespritzt.

Die Schnittdarstellung gemäß Linie D-D zeigt den unteren Bereich des feststehenden Fensters 10 und des auf der Innenseite angeordneten bewegbaren Fensters 12. Hier ist der untere Führungsbolzen 140 entsprechend in der unteren Führungsschiene 22 aufgenommen. Das feststehende Fenster 10 ist mit der Karosserieaußenhaut 50 verklebt.

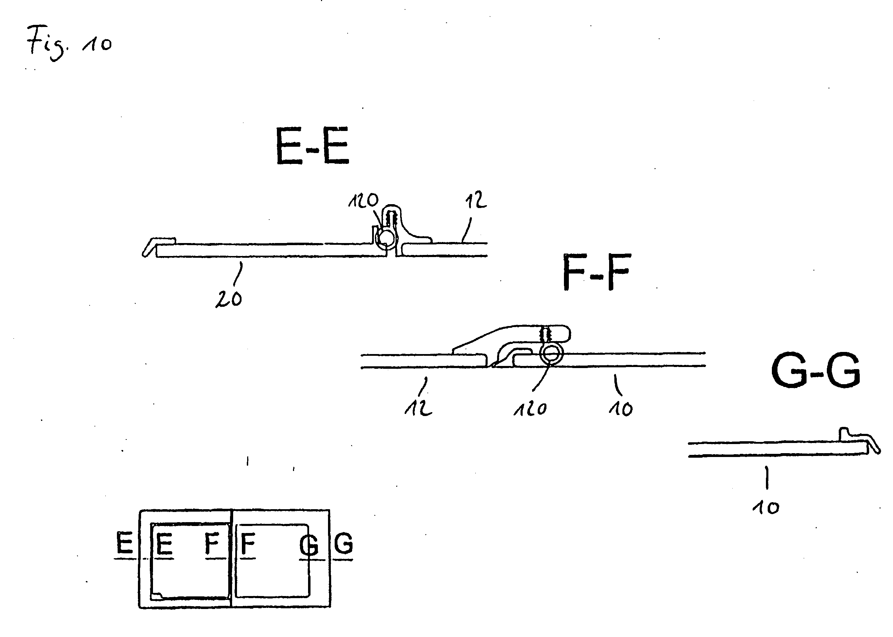

Fig. 10 zeigt Horizontalschnitte durch unterschiedliche Bereiche des erfindungsgemäßen Schiebefensters.

Die Schnittdarstellung gemäß Linie E-E zeigt den eingeklebten Blendrahmen 20 und das bündig darin aufgenommene bewegbare Fenster 12. Dieses ist abdichtend mittels der umlaufenden Dichtung 120 an dem Blendrahmen 20 angeordnet.

Die Schnittdarstellung gemäß Linie F-F zeigt den Übergangsbereich zwischen bewegbarem Fenster 12 und feststehendem Fenster 10. Auch hier ergibt sich mittels der Dichtung 120 eine dichte Verbindung beider Bauteile. Es ist erkennbar, daß das bewegbare Fenster 12 bündig sowohl mit dem Blendrahmen 20 als auch mit dem feststehenden Fenster 10 abschließt.

Die Schnittdarstellung gemäß Linie G-G zeigt das feststehende Fenster 10, das mit der Karosserieaußenhaut verklebt ist.

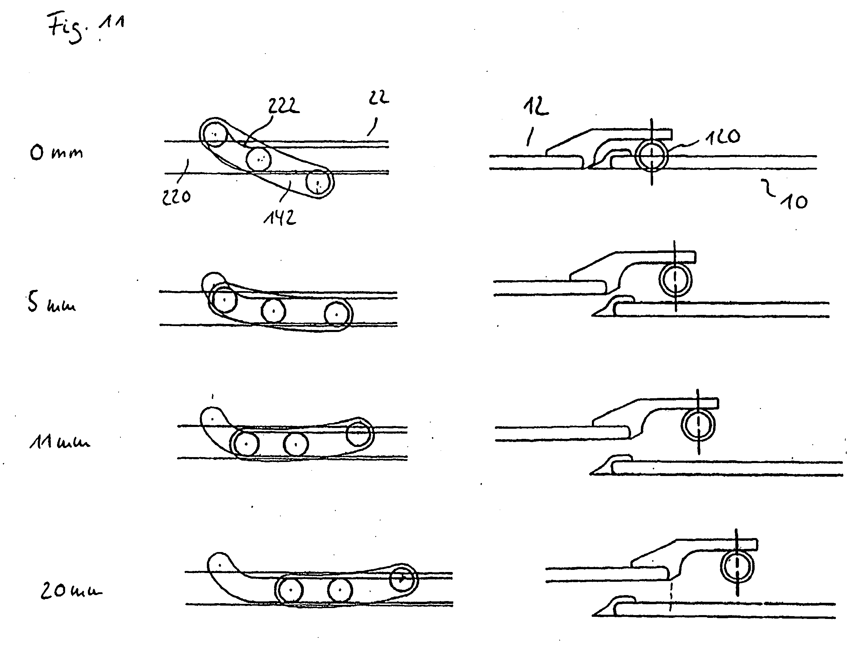

In Fig. 11 ist die Kinematik der Öffnungsbewegung des bewegbaren Fensters 12 dargestellt. In der linken Spalte ist der laterale Öffnungsweg des bewegbaren Fensters 12 angegeben. Die mittlere Spalte zeigt die Position des Führungshebels 142 für die jeweiligen lateralen Öffnungswege. Die rechte Spalte zeigt die Bewegung des bewegbaren Fensters 12 relativ zum feststehenden Fenster 10.

Im geschlossenen Zustand (Öffnungsweg = 0 mm) befinden sich die beiden links dargestellten Gleitbuchsen des Führungshebels 142 im gekrümmten Endbereich der Nut 222 des Führungselementes 22. Die Nut 222 weist eine größere Tiefe als die Nut 220 auf, die den (nicht dargestellten) Führungsbolzen des Rahmens des bewegbaren Fensters 12 aufnimmt. Der kreisförmige rechts dargestellte Bolzen des Führungshebels 142 stellt den Befestigungspunkt des Führungshebels 142 an dem Rahmen 14 des bewegbaren Fensters 12 dar.

Ist das bewegbare Fenster 12 noch geschlossen, liegt dessen Außenseite bündig mit der Außenseite des feststehenden Fensters in einer Ebene. Die an dem Rahmen 14 angeordnete Dichtung 120 liegt auf der Innenseite des feststehenden Fensters 10 an.

Wird das bewegbare Fenster 12 geringfügig geöffnet (Öffnungsweg = 5 mm), werden die Gleitbuchsen des Führungshebels 142 aus dem gekrümmten Endbereich der Nut 222 nach rechts herausbewegt. Dadurch ergibt sich nicht nur eine entsprechende laterale Bewegung des bewegbaren Fensters 12, sondern auch eine der Krümmung entsprechende Ausstellbewegung. Dies führt dazu, daß, wie dies aus der rechten Spalte gemäß Fig. 11 hervorgeht, das bewegbare Fenster 12 nach innen an dem feststehenden Fenster 10 vorbeigeschoben werden kann.

Wird das bewegbare Fenster 12 über die in Zeile 3 dargestellte Position (Öff nungsweg = 11 mm) weiterbewegt, befinden sich die Gleitbuchsen des Führungshebels 142 schließlich in dem gradlinig verlaufenden Abschnitt der Nut 222 (s. Zeile 4, Öffnungsweg = 20 mm), was in einer entsprechend gradlinigen (lateralen) Bewegung des bewegbaren Fensters 12 resultiert.

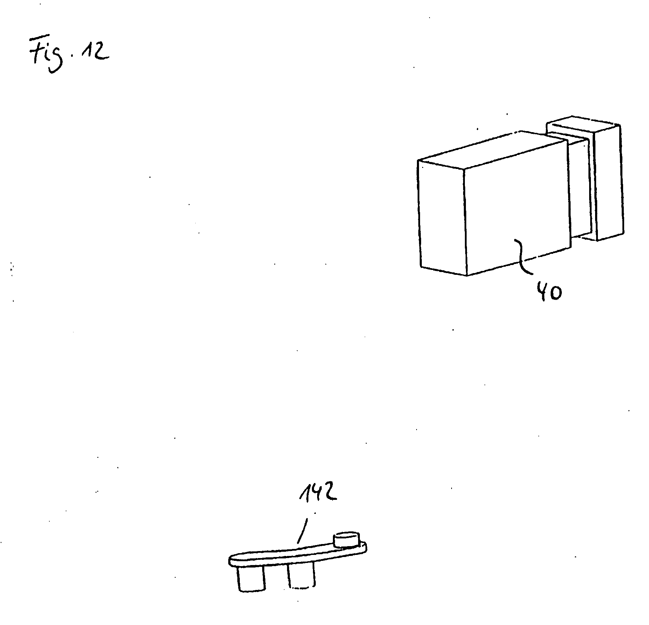

In Fig. 12 ist das Griffelement 40 dargestellt, das aus Stahlfedern und Kunststoffteilen (Betätigungsgriff, Gehäuse, Schiebeelemente) ausgeführt ist.

Fig. 12 (unten) zeigt den erfindungsgemäßen Führungshebel 142, der auf seiner Unterseite die in der Führungsschiene aufgenommenen Gleithülsen aufweist, die auf entsprechende Bolzen aufgesteckt sind, und auf der Oberseite einen Vorsprung umfaßt, der den Befestigungspunkt an dem Rahmen des bewegbaren Fensters bildet.

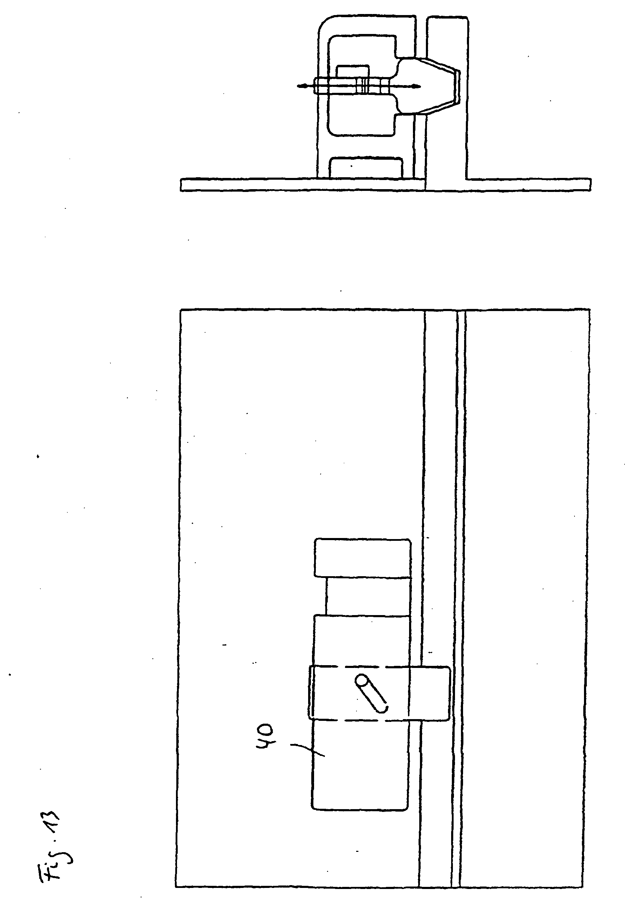

In Fig. 13 (links) ist eine Vorderansicht des Griffelementes 40 dargestellt. Die Schnittansicht gemäß Fig. 13 (rechts) zeigt das vertikal bewegbare und als Schieber ausgeführte Verriegelungselement, mittels dessen ein Lösen oder eine Blockierung des bewegbaren Fensters erzielbar ist.

Ein vorteilhafter Fertigungsablauf für das erfindungsgemäße Schiebefenster basiert auf der getrennten Herstellung eines feststehenden Moduls und eines bewegbaren Moduls. Dabei umfaßt das feststehende Modul das feststehende Fenster, den Blendrahmen sowie die Führungsschienen mit Walzprofil. Das bewegbare Modul besteht aus dem bewegbaren Fenster mit Rahmen und Schlauchdichtung sowie aus an dem Rahmen angeordneten Führungshebeln.

In einem ersten Schritt der Herstellung des feststehenden Moduls wird die Scheibe des feststehenden Fensters mit einer gesamt umlaufenden Dichtung, vorzugsweise aus TPE, oder auch aus Thermoplasten oder durch RIM umspritzt. Ferner wird ein Walzprofil für die obere und untere Führungsschiene erstellt. Dieses wird in die gespritzte Führungsschiene eingelegt und diese mit dem ebenfalls gespritzten Blendrahmen durch ein werkstoffabhängiges Schweißverfahren, beispielsweise durch lineares Vibrationsschweißen, oder durch einen Klebeprozeß verbunden.

Die Führungsschienen mit angeschweißtem oder geklebtem Blendrahmen werden schließlich mit der festen Scheibe verklebt.

Die Herstellung des bewegbaren Moduls beruht zunächst auf der Erstellung der Führungshebel und der bewegbaren Scheibe, die mit einem Kunststoffrahmen umspritzt wird. Der Kunststoffrahmen wird mit einer Metalleinlage versehen. Im Anschluß daran wird die umlaufende Schlauchdichtung in den Kunststoffrahmen eingezogen. Schließlich werden die Führungshebel sowie ein Griffelement mit dem Kunststoffrahmen verschraubt. Die Führungsbolzen werden vorteilhaft an den Kunststoffrahmen angespritzt.

In einem letzten Herstellungsschritt wird das bewegbare Modul in das feststehende Modul eingesetzt, womit sich das erfindungsgemäße Schiebefenster mit einer vorteilhaft geringen Einbautiefe ergibt. Dieses wird im auf diese Weise zusammengestellten Zustand komplett in eine entsprechende Öffnung der Karosserie eines Fahrzeuges eingeklebt.

## Patentansprüche

1. Schiebefenster zum Einbau in Türen oder Seitenwände von Fahrzeugen mit wenigstens einem feststehenden Fenster (10) und wenigstens einem bewegbaren Fenster (12), mit Führungsschienen (22), in denen das bewegbare Fenster (12) verschiebbar aufgenommen ist,
**gekennzeichnet durch**
einen neben dem feststehenden Fenster (10) angeordneten und mit diesem verbundenen, feststehenden Blendrahmen (20), in dem das bewegbare Fenster (12) im geschlossenen Zustand aufgenommen ist, wobei die Führungsschienen (22) auf der zum Fahrzeuginnenraum gerichteten Seite mit dem feststehenden Fenster (10) und/oder mit dem Blendrahmen (20) verbunden sind und derart angeordnet sind, daß das bewegbare Fenster (12) beim Öffnen innen an dem feststehenden Fenster (10) vorbeigeführt wird, wobei das bewegbare Fenster (12) einen Rahmen (14) aufweist, an dessen Ober- und Unterseite Führungsbolzen (140) vorgesehen sind und wobei das feststehende Fenster ohne einen umlaufenden Rahmen in eine Karosserieöffnung einsetzbar ist.

2. Schiebefenster nach Anspruch 1, **dadurch gekennzeichnet, daß** das bewegbare Fenster (12) im geschlossenen Zustand bündig mit dem Blendrahmen (20) abschließt und daß die Außenseite des Blendrahmens (20) mit der Außenseite des feststehenden Fensters (10) fluchtet.

3. Schiebefenster nach einem dervorhergehenden Ansprüche, **dadurch gekennzeichnet, daß** die Führungsschienen (22) mit dem Blendrahmen (20) sowie mit dem feststehenden Fenster (10) verbunden sind.

4. Schiebefenster nach einem der vorhergehenden Ansprüche, **dadurch gekennzeichnet, daß** die Führungsschienen (22) mit dem Blendrahmen (20) verklebt oder durch ein werkstoffabhängiges Kunststoff-Schweißverfahren verbunden sind und mit dem feststehenden Fenster (10) verklebt sind.

5. Schiebefenster nach einem der vorhergehenden Ansprüche, **dadurch gekennzeichnet, daß** die Führungsschienen (22) gänzlich aus Metall oder Kunststoff hergestellt sind oder eine Kunststoffassung aufweisen, in die ein gebogenes Walzprofil aus Stahl oder ein Preßprofil aus Aluminium eingelegt ist.

6. Schiebefenster nach einem der vorhergehenden Ansprüche, **dadurch gekennzeichnet, daß** der Rahmen (14) als umlaufend angespritzter Kunststoffrahmen ausgeführt ist.

7. Schiebefenster nach Anspruch 6, **dadurch gekennzeichnet, daß** der Kunststoffrahmen eine Metalleinlage aufweist.

8. Schiebefenster nach einem der vorhergehenden Ansprüche, **dadurch gekennzeichnet, daß** auf der Ober- und/oder Unterseite des Rahmens (14) Führungshebel (142) angeordnet sind, die mit dem Rahmen (14) schwenkbar verbunden sind und die derart in den Führungsschienen (22) aufgenommen sind, daß eine Schiebebewegung des bewegbaren Fensters (12) zu dessen Ausstellbewegung führt.

9. Schiebefenster nach einem oder vorhergehenden Ansprüche, **dadurch gekennzeichnet, daß** die Führungsschienen (22) zwei unterschiedlich tief ausgeführte Nuten (220,222) aufweisen und die Führungsbolzen (140) in einer Nut (220) und die Führungshebel (142) in der anderen Nut (222) bewegbar aufgenommen sind.

10. Schiebefenster nach Anspruch 9, **dadurch gekennzeichnet, daß** die die Führungshebel (142) aufnehmende Nut (222) in ihrem Endbereich gekrümmt ausgeführt ist.

11. Schiebefenster nach einem der vorhergehenden Ansprüche, **dadurch gekennzeichnet, daß** das bewegbare Fenster (12) eine umlaufende und außen liegende Dichtung (120) aufweiset.

12. Schiebefenster nach Anspruch 11, **dadurch gekennzeichnet, daß** die umlaufende und nach außen gerichtete Dichtung (120) als Schlauchdichtung augeführt ist.

13. Schiebefenster nach einem der vorhergehenden Ansprüche, **dadurch gekennzeichnet, daß** umlaufend um das feststehende Fenster (10) und den Blendrahmen (20) eine Dichtung (30) angeordnet ist.

## Claims

1. Sliding window for fitting into doors or sidewalls of vehicles, having at least one fixed window (10) and at least one movable window (12), and having guide rails (22) in which the movable window (12) is displaceably held, **characterized by** a fixed window frame (20) which is arranged next to the fixed window (10) and is connected to the latter and in which the movable window (12) is held in the closed state, the guide rails (22), on the side directed towards the vehicle interior, being connected to the fixed window (10) and/or to the window frame (20) and being arranged in such a manner that the movable window (12), when being opened, is guided on the inside past the fixed window (10), the movable window (12) having a frame (14), on the upper and lower side of which guide pins (140) are provided and it being possible to insert the fixed window without an encircling frame into a body opening.

2. Sliding window according to Claim 1, **characterized in that** the movable window (12), in the closed state, ends flush with the window frame (20), and **in that** the outside of the window frame (20) is aligned with the outside of the fixed window (10).

3. Sliding window according to either of the preceding claims, **characterized in that** the guide rails (22) are connected to the window frame (20) and to the fixed window (10).

4. Sliding window according to one of the preceding claims, **characterized in that** the guide rails (22) are bonded to the window frame (20) or are connected by a material-dependent plastic welding process and are bonded to the fixed window (10).

5. Sliding window according to one of the preceding claims, **characterized in that** the guide rails (22) are produced entirely from metal or plastic or have a plastic mount into which a bent rolled steel profile or a pressed aluminium profile is placed.

6. Sliding window according to one of the preceding claims, **characterized in that** the frame (14) is designed as a plastic frame injection moulded in an encircling manner.

7. Sliding window according to Claim 6, **characterized in that** the plastic frame has a metal insert.

8. Sliding window according to one of the preceding claims, **characterized in that** guide levers (142) are arranged on the upper and/or lower side of the frame (14), are connected pivotably to the frame (14) and are held in the guide rails (22) in such a manner that a sliding movement of the movable window (12) results in the opening-out movement thereof.

9. Sliding window according to one of the preceding claims, **characterized in that** the guide rails (22) have two grooves (220, 222) formed at different depths, and the guide pins (140) are held movably in one groove (220) and the guide levers (142) are held movably in the other groove (222).

10. Sliding window according to Claim 9, **characterized in that** the groove (222) which holds the guide levers (142) is of curved design in its end region.

11. Sliding window according to one of the preceding claims, **characterized in that** the movable window (12) has an encircling and externally situated seal (120).

12. Sliding window according to Claim 11, **characterized in that** the encircling seal (120) which is directed outwards is designed as a tubular seal.

13. Sliding window according to one of the preceding claims, **characterized in that** a seal (30) is arranged encircling the fixed window (10) and the window frame (20).

## Revendications

1. Fenêtre coulissante pour le montage dans des portes ou des parois latérales de véhicules avec au moins une fenêtre fixe (10) et au moins une fenêtre mobile (12), avec des rails de guidage (22), dans lesquels la fenêtre mobile (12) est reçue d'une manière coulissante, **caractérisée par** un cadre de garnissage fixe (20) disposé à côté de la fenêtre fixe (10) et relié à celle-ci dans lequel la fenêtre mobile (12), à l'état fermé, est reçue, où les rails de guidage (22), au côté orienté vers l'espace intérieur du véhicule, sont reliés à la fenêtre fixe (10) et/ou au cadre de garnissage (20) et sont disposés de façon que la fenêtre mobile (12), lors de l'ouverture, est amenée à passer à l'intérieur devant la fenêtre fixe (10), où la fenêtre mobile (12) présente un châssis (14) aux côtés supérieur et inférieur duquel sont prévus des boulons de guidage (140), et où la fenêtre fixe peut être placée sans châssis s'étendant tout autour dans une ouverture de carrosserie.

2. Fenêtre coulissante selon la revendication 1, **caractérisée en ce que** la fenêtre mobile (12), à l'état fermé, se termine en affleurement avec le cadre de garnissage (20), et **en ce que** le côté extérieur du cadre de garnissage (20) est en affleurement avec le côté extérieur de la fenêtre fixe (10).

3. Fenêtre coulissante selon l'une des revendications précédentes, **caractérisée en ce que** les rails de guidage (22) sont reliés au cadre de garnissage (20) et à la fenêtre fixe (10).

4. Fenêtre coulissante selon l'une des revendications précédentes, **caractérisée en ce que** les rails de guidage (22) sont assemblés par collage avec le cadre de garnissage (20) ou sont reliés par un procédé de soudage de matériau synthétique dépendant du matériau et sont assemblés par collage avec la fenêtre fixe (10).

5. Fenêtre coulissante selon l'une des revendications précédentes, **caractérisée en ce que** les rails de guidage (22) sont fabriqués entièrement en métal ou en matériau synthétique ou présentent un châssis en matériau synthétique dans lequel est placé un profilé laminé coudé en acier ou un profilé pressé en aluminium.

6. Fenêtre coulissante selon l'une des revendications précédentes, **caractérisée en ce que** le châssis (14) est réalisé comme châssis en matériau synthétique rapporté tout autour par moulage par injection.

7. Fenêtre coulissante selon la revendication 6, **caractérisée en ce que** le châssis en matériau synthétique présente un insert métallique.

8. Fenêtre coulissante selon l'une des revendications précédentes, **caractérisée en ce que** sont disposés sur le côté supérieur et/ou inférieur du châssis (14) des leviers de guidage (142) qui sont reliés d'une manière pivotante au châssis (14) et qui sont reçus de telle sorte dans les rails de guidage (22) qu'un mouvement de coulissement de la fenêtre mobile (12) entraîne un mouvement orientable de celle-ci.

9. Fenêtre coulissante selon l'une des revendications précédentes, **caractérisée en ce que** les rails de guidage (22) présentent deux rainures (220, 222) de profondeur différente, et **en ce que** les boulons de guidage (140) sont reçus d'une manière mobile dans une rainure (220) et les leviers de guidage (142) dans l'autre rainure (222).

10. Fenêtre coulissante selon la revendication 9, **caractérisée en ce que** la rainure (222) recevant les leviers de guidage (142) est courbée dans sa zone d'extrémité.

11. Fenêtre coulissante selon l'une des revendications précédentes, **caractérisée en ce que** la fenêtre mobile (12) présente un joint d'étanchéité (120) s'étendant tout autour et situé à l'extérieur.

12. Fenêtre coulissante selon la revendication 11, **caractérisée en ce que** le joint d'étanchéité (120) s'étendant tout autour et dirigé vers l'extérieur est réalisé comme joint d'étanchéité tubulaire.

13. Fenêtre coulissante selon l'une des revendications précédentes, **caractérisée en ce qu'**un joint d'étanchéité (30) est disposé pour s'étendre tout autour de la fenêtre fixe (10) et du cadre de garnissage (20).
